# FASCICULE DE BREVET EUROPEEN

(11) **EP 2 682 323 B1**
(45) Date de publication et mention de la délivrance du brevet: **16.05.2018**
(21) Numéro de dépôt: 13175426.9
(22) Date de dépôt: 05.07.2013
(51) Int. Cl.: B61L 15/00, B61L 27/00, G01M 13/04

(54) **Prédiction de l'état structurel d'un organe cinématique rotatif d'une chaîne cinématique**
Vorhersage des Strukturzustands eines sich drehenden kinematischen Organs einer kinematischen Kette
Prediction of the structural condition of a rotary drive member of a drive train.

(30) Priorité: 06.07.2012 FR 1256565
(43) Date de publication de la demande: 08.01.2014
(73) Titulaire: NTN-SNR Roulements, 74010 Annecy (FR)
(72) Inventeur: Desbiolles, Pascal, 74570 Thorens Glieres (FR); Guerre-Chaley, Frédéric, 74230 Dingy Saint Clair (FR)
(74) Mandataire: Derambure Conseil

(56) Documents cités:
- WO-A1-2008/014766
- DE-A1-102004 048 649
- US-A1- 2005 119 840
- US-A1- 2007 208 841

## Description

L'invention concerne la prédiction qu'un organe cinématique rotatif à surveiller devrait passer un seuil critique relatif à l'état structurel - tel qu'un défaut de l'organe cinématique rotatif à surveiller - après une certaine rotation - durée de rotation ou nombre de tours de rotation -.

Dans le contexte de l'invention, l'on entend par « chaîne cinématique », un ensemble mécanique comprenant ou associé à une transmission, un freinage, une boîte de vitesses, un motoréducteur, un variateur de vitesse, un démarreur, une turbine, un embrayage, cette liste étant indicative et nullement limitative.

L'invention a plus spécialement pour objet un procédé de prédiction qu'un organe cinématique rotatif à surveiller devrait atteindre un seuil significatif d'un état structurel donné, un système de prédiction spécialement destiné à la mise en oeuvre de ce procédé de prédiction, l'application de ce procédé à la prédiction de l'état structurel d'un organe cinématique rotatif à surveiller d'une chaîne cinématique d'un appareil, d'une machine ou d'un engin tel qu'un engin à roues, en particulier un train et, enfin, un appareil, une machine ou un engin, tel qu'un engin à roues, comportant un tel système de prédiction.

L'invention s'applique à une chaîne cinématique d'un engin, d'un appareil, d'une machine. Par exemple, il peut s'agir d'un engin à roues, pouvant comporter plusieurs chaînes cinématiques, chacune comportant plusieurs organes cinématiques associés les uns aux autres tels qu'une roue, un essieu associé à la roue, une unité de roulement à corps roulants associée à l'essieu et à un châssis, et le cas échéant un dispositif d'entraînement en rotation de l'essieu. Ou il peut s'agir d'une éolienne, d'un ventilateur industriel, d'une machine-outil.

Dans le contexte de l'invention, l'on entend par « unité de roulement », un ensemble constituant un roulement ou incluant un roulement et comprenant typiquement, au moins, une bague externe et une bague interne, les deux bagues étant coaxiales et espacées radialement, et une pluralité corps roulants interposés entre les deux bagues et coopérant avec des chemins de roulement ménagées sur celles-ci, moyennant généralement une cage de roulement. Par exemple dans le cas particulier d'une application à un engin à roues, une telle unité de roulements est implantée sur l'engin à roues en question, d'une part étant portée par la structure portante de l'engin (châssis), d'autre part, portant l'arbre rotatif de roue.

Dans le cas particulier de l'application à un engin à roues, celui-ci est par exemple un train, mais peut être aussi un engin mobile et/ou automobile tel qu'un chariot de transport ou de manutention ou un camion, cette liste n'étant pas limitative. De façon connue, un tel engin à roues comporte une pluralité de chaînes cinématiques, plusieurs roues sur plusieurs essieux et, pour un train, plusieurs boggies. Un tel engin à roues est amené à se déplacer ou à être déplacé sur une voie d'un réseau de voies. Lors d'un tel déplacement, les unités de roulement sont en fonctionnement rotatif.

Dans le contexte de l'invention, l'on entend par état « structurel » d'un organe cinématique rotatif, l'état de l'organe cinématique rotatif eu égard à une caractéristique propre de celle-ci ayant un effet sur ses conditions de roulement. Par exemple, dans le cas d'une unité de roulement, l'état structurel est la présence ou l'importance d'une altération de l'état de surface des chemins de roulement, de la bague, ou des corps roulants eux-mêmes, tel qu'un écaillage, ou une détérioration plus ou moins importante de la cage du roulement, qui peut avoir pour effet une irrégularité de la rotation, voire son blocage et *in fine* une destruction plus ou moins importante de l'unité de roulement. Une telle altération de l'unité de roulement est peu décelable voire invisible à l'oeil, outre d'ailleurs qu'elle peut être masquée à la vue par des organes de l'unité de roulement ou de l'engin, l'appareil, la machine sur lequel il est implanté. Une telle altération de l'unité de roulement peut apparaître pour nombre de raisons, et de façon impromptue. Elle peut se dégrader de façon plus ou moins rapide. Et, elle peut perturber le bon fonctionnement de l'unité de roulement, et donc de l'engin, voire mettre en cause la sécurité.

Dans le contexte de l'invention, l'on entend par « prédiction » de l'état structurel d'un organe cinématique rotatif, la conclusion tirée sur la nature ou le degré de l'état structurel prospectif, qui peut être déduit d'une mesure et d'une loi d'évolution donnée de l'état structurel en fonction de la rotation de l'organe cinématique rotatif considéré, notamment comparativement à un état structurel considéré comme significatif, et notamment problématique ou plus ou moins critique, au regard d'un fonctionnement normal ou de la sécurité ou de la maintenance ou de la nécessité de remplacer ou de prévoir de remplacer l'organe cinématique rotatif considéré par un organe cinématique rotatif neuf ou du moins ayant un état structurel convenable.

Le document FR 2 944 875 décrit un procédé de détection d'un défaut structurel d'une unité de roulement. Selon ce procédé, on mesure la vitesse instantanée de rotation et on traite la vitesse ainsi mesurée de sorte à déduire l'apparition d'un défaut (c'est-à-dire une modification) de l'état structurel de l'unité de roulement.

Mais, d'une part, si avec le procédé décrit dans le document FR 2 944 875, il est possible d'opérer un diagnostic ou une surveillance, il n'est pas envisagé de prédire ce que serait l'état structurel après un certain nombre de tours de rotation ou une certaine durée de rotation, tout spécialement correspondant à un état structurel critique.

D'autre part, avec le procédé décrit dans le document FR 2 944 875, la détection du défaut structurel est faite sur l'unité de roulement sur laquelle on mesure la vitesse, mais non sur les autres organes cinématiques de la même chaîne cinématique.

Le document US 5 511 422 décrit un procédé et un système pour analyser des signaux de machines tournantes contenant des composants rotatifs et détecter les défauts dans les composants, le paramètre analysé étant la vibration.

Le document EP-A-2 226 621 vise un procédé destiné à prédire une défaillance dans un roulement à rouleaux comportant des bagues interne et externe et des corps roulants répartis uniformément de façon angulaire, le procédé comprenant : le traitement d'un signal de position indiquant une position angulaire relative de la bague interne par rapport à la bague externe, et un signal de vibration indiquant des vibrations liées à la vitesse dans le roulement à rouleaux, de sorte qu'ils correspondent soit à un déplacement angulaire du corps roulant égal à un nombre entier d'espaces angulaires situés entre des corps roulants soit à un nombre entier de rotations complètes de la bague interne par rapport à la bague externe ; ainsi que l'échantillonnage spatial du signal de vibration traité en fonction du signal de position traité ; et enfin la prédiction d'une défaillance dans le roulement à rouleaux selon le signal de vibration ayant subi un échantillonnage spatial.

Le document EP-A-1 184 813 décrit un procédé et un appareil pour prédire la durée de vie d'un roulement ayant une spécification qui permet à la charge dynamique de base et à la charge statique de base d'être calculées.

Le document US 2005/0119840 vise un procédé pour surveiller l'état d'un organe cinématique rotatif à partir d'une mesure de la vibration à différents endroits de l'organe.

Le document DE 10 2004 048 649 A prévoit de mesurer des paramètres du roulement, et la mémorisation des paramètres mesurés de sorte à pouvoir faire une évaluation assistée par ordinateur en relation avec la durée de vie.

L'invention a pour but de perfectionner le procédé tel que décrit dans le document FR 2 944 875, ou tout procédé ayant le même but, afin, d'une part, de ne pas seulement diagnostiquer et surveiller, mais prédire et, d'autre part, de prédire l'état structurel de l'organe cinématique rotatif sur lequel est faite la mesure, mais également d'un ou plusieurs autres organes cinématiques de la même chaîne cinématique.

A cet effet, selon un premier aspect, l'invention a pour objet un procédé de prédiction du passage d'un seuil critique relatif à l'état structurel d'un organe cinématique rotatif à surveiller - tel qu'un défaut de l'organe cinématique rotatif à surveiller - après une certaine rotation - durée de rotation ou nombre de tours de rotation -, l'organe cinématique rotatif à surveiller faisant partie d'une chaîne cinématique comportant plusieurs organes cinématiques associés les uns aux autres d'un appareil, d'une machine ou d'un engin, tels qu'une roue, un essieu associé à la roue, une unité de roulement à corps roulants associée à l'essieu et à un châssis, et le cas échéant un dispositif d'entraînement en rotation de l'essieu, dont un organe cinématique rotatif pour la mesure, dans lequel :
▪ on définit un paramètre indicateur des conditions de rotation de l'organe cinématique rotatif pour la mesure caractéristique de l'état structurel de l'organe cinématique rotatif à surveiller,
▪ on a à disposition une loi d'évolution du paramètre indicateur en fonction de la rotation de l'organe cinématique rotatif à surveiller - cumul du nombre de tours de rotation ou durée de rotation - prenant en compte la nature dudit état structurel considéré,
▪ on définit au moins une valeur dudit paramètre indicateur - ou fonction dudit paramètre indicateur - qui est caractéristique dudit seuil significatif correspondant audit état structurel donné, seuil du nombre de tours de rotation ou de durée de rotation,
▪ lorsque la chaîne cinématique est en rotation, dans une opération de mesure ou de calcul, on mesure le paramètre indicateur sur l'organe cinématique rotatif pour la mesure ou on calcule le paramètre indicateur à partir d'au moins un paramètre de roulement mesuré sur l'organe cinématique rotatif pour la mesure,
▪ on associe la valeur mesurée ou calculée du paramètre indicateur au cumul correspondant du nombre de tours de rotation ou de la durée de rotation de l'organe cinématique rotatif à surveiller,
▪ à partir de la valeur mesurée ou calculée du paramètre indicateur et de la loi d'évolution, dans une opération de comparaison, on compare ledit cumul correspondant du nombre de tours de rotation ou de la durée de rotation de l'organe cinématique rotatif à surveiller et le seuil du nombre de tours de rotation ou de la durée de rotation et on déduit le nombre de tours de rotation ou la durée de rotation pour atteindre le seuil du nombre de tours de rotation ou de la durée de rotation.

Selon les réalisations, l'organe cinématique rotatif à surveiller est le même que l'organe cinématique rotatif pour la mesure ou bien l'organe cinématique rotatif à surveiller est différent de l'organe cinématique rotatif pour la mesure.

Selon une réalisation, l'organe cinématique rotatif pour la mesure est l'unité de roulement à corps roulants.

Selon une réalisation, le paramètre indicateur est calculé à partir de la vitesse de rotation instantanée.

Selon une réalisation, l'état structurel donné est une altération de l'organe cinématique rotatif à surveiller.

Selon les réalisations, on réalise l'opération de comparaison simultanément à l'opération de mesure ou de calcul ou on réalise l'opération de comparaison postérieurement à l'opération de mesure ou de calcul.

Selon une réalisation, on réalise l'opération de mesure ou de calcul en permanence et en temps réel.

Selon les réalisations, l'opération de calcul est réalisée alors que l'appareil, la machine ou l'engin soit est en mouvement soit est à l'arrêt.

Selon les réalisations, l'opération de calcul soit est réalisée sur l'appareil, la machine ou l'engin lui-même soit est réalisée de façon déportée par rapport à l'appareil, la machine ou l'engin.

Selon une réalisation, on communique depuis l'appareil, la machine ou l'engin et de façon déportée par rapport à lui des données à savoir paramètre indicateur ou nombre de tours de rotation ou durée de rotation pour atteindre le seuil du nombre de tours de rotation ou de la durée de rotation.

Selon un deuxième aspect, l'invention a pour objet un système de prédiction qu'un organe cinématique rotatif à surveiller devrait atteindre un seuil significatif d'un état structurel donné - tel qu'un défaut de l'organe cinématique rotatif à surveiller - après une certaine rotation - durée de rotation ou nombre de tours de rotation -, l'organe cinématique rotatif à surveiller faisant partie d'une chaîne cinématique comportant plusieurs organes cinématiques associés les uns aux autres d'un appareil, d'une machine ou d'un engin, tels qu'une roue, un essieu associé à la roue, une unité de roulement à corps roulants associée à l'essieu et à un châssis, et le cas échéant un dispositif d'entraînement en rotation de l'essieu, dont un organe cinématique rotatif pour la mesure, ce système de prédiction étant spécialement destiné à la mise en oeuvre du procédé de prédiction tel qu'il a été précédemment décrit, qui comprend :
▪ un paramètre indicateur des conditions de rotation de l'organe cinématique rotatif pour la mesure caractéristique de l'état structurel de l'organe cinématique rotatif à surveiller,
▪ une loi d'évolution du paramètre indicateur en fonction de la rotation de l'organe cinématique rotatif à surveiller - cumul du nombre de tours de rotation ou durée de rotation - prenant en compte la nature dudit état structurel considéré,
▪ une valeur dudit paramètre indicateur - ou fonction dudit paramètre indicateur - qui est caractéristique dudit seuil significatif correspondant audit état structurel donné, seuil du nombre de tours de rotation ou de durée de rotation,
▪ un moyen de mesure sur ou de calcul du paramètre indicateur à partir de l'organe cinématique rotatif pour la mesure,
▪ un moyen d'association de la valeur mesurée ou calculée du paramètre indicateur au cumul correspondant du nombre de tours de rotation ou de la durée de rotation de l'organe cinématique rotatif à surveiller,
▪ un moyen de comparaison du cumul correspondant du nombre de tours de rotation ou de la durée de rotation de l'organe cinématique rotatif à surveiller et du seuil du nombre de tours de rotation ou de la durée de rotation, de sorte à déduire le nombre de tours de rotation ou la durée de rotation pour atteindre le seuil du nombre de tours de rotation ou de la durée de rotation.

Selon un troisième aspect, l'invention a pour objet l'application du procédé de prédiction tel qu'il a été précédemment décrit, à la prédiction de l'état structurel d'un organe cinématique rotatif à surveiller d'une chaîne cinématique d'un appareil, d'une machine ou d'un engin tel qu'un engin à roues, en particulier un train.

Enfin, selon un dernier aspect, l'invention a pour objet un appareil, une machine ou un engin, tel qu'un engin à roues, comportant au moins une chaîne cinématique comportant plusieurs organes cinématiques associés les uns aux autres, dont au moins un organe cinématique rotatif à surveiller en ce qu'il devrait atteindre un seuil significatif d'un état structurel donné - tel qu'un défaut - après une certaine rotation - durée de rotation ou nombre de tours de rotation -, qui comporte au moins un système de prédiction tel qu'il a été précédemment décrit.

On décrit maintenant brièvement les figures des dessins.

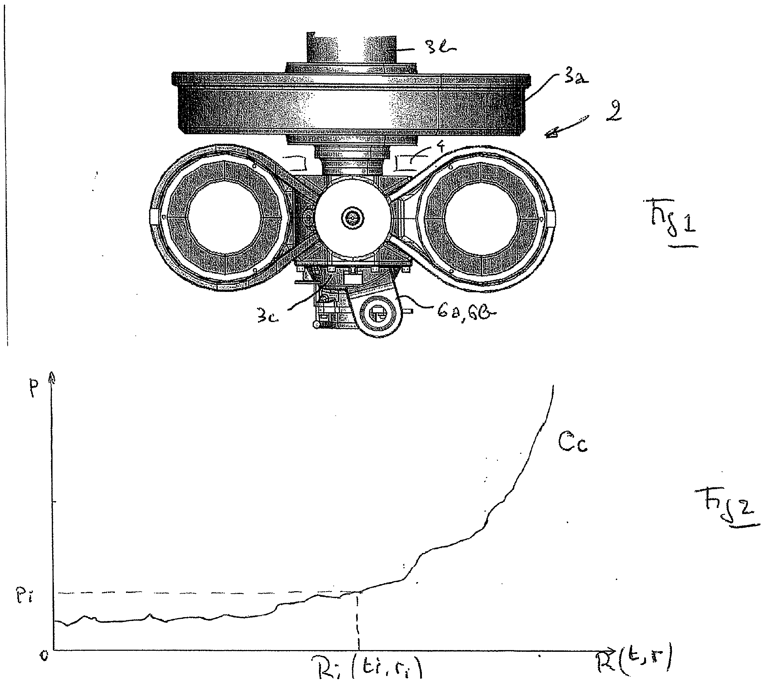

La figure 1 est une représentation schématique d'une chaîne cinématique comportant plusieurs organes cinématiques associés les uns aux autres d'un appareil, d'une machine ou d'un engin, ici une roue, un essieu associé à la roue, une unité de roulement à corps roulants associée à l'essieu et à un châssis, comprenant un organe rotatif à surveiller en ce qu'il devrait atteindre un seuil significatif d'un état structurel donné - tel qu'un défaut - après une certaine rotation - durée de rotation ou nombre de tours de rotation - et un organe cinématique rotatif pour la mesure, dans une réalisation où l'organe cinématique rotatif à surveiller est le même que l'organe cinématique rotatif pour la mesure, et un système de prédiction selon l'invention tel que l'organe cinématique rotatif à surveiller devrait atteindre et passer le seuil significatif en question.

La figure 2 est une représentation graphique selon deux axes (abscisses et ordonnées), correspondant à un cas réel, d'un paramètre indicateur des conditions de rotation de l'organe cinématique rotatif à surveiller de la chaîne cinématique de la figure 1, en fonction de la rotation de celui-ci, telle que le cumul du nombre de tours de rotation ou la durée de rotation.

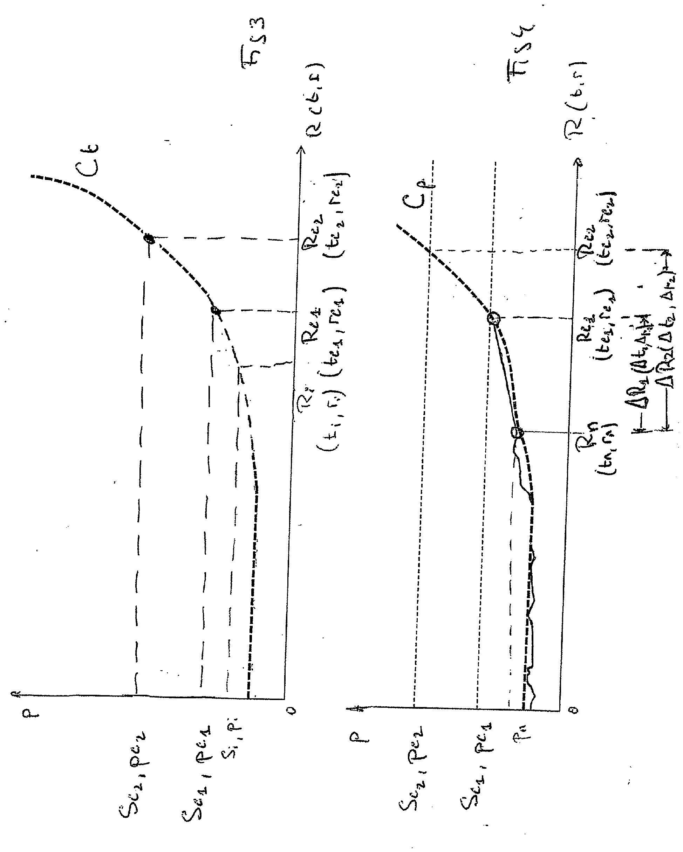

La figure 3 est une représentation graphique analogue à celle de la figure 2, illustrant la loi d'évolution (fonction) du paramètre indicateur des conditions de rotation de l'organe cinématique rotatif à surveiller en fonction de la rotation de celui-ci, tel que le cumul du nombre de tours de rotation ou la durée de rotation, et indiquant deux valeurs du paramètre indicateur, ou fonction du paramètre indicateur, qui sont caractéristiques, chacun, d'un seuil significatif d'un certain état structurel identifié de l'organe cinématique rotatif à surveiller, tel qu'un défaut de celui-ci.

La figure 4 est une représentation graphique analogue à celles des figures 1 et 2, illustrant le procédé de prédiction selon l'invention.

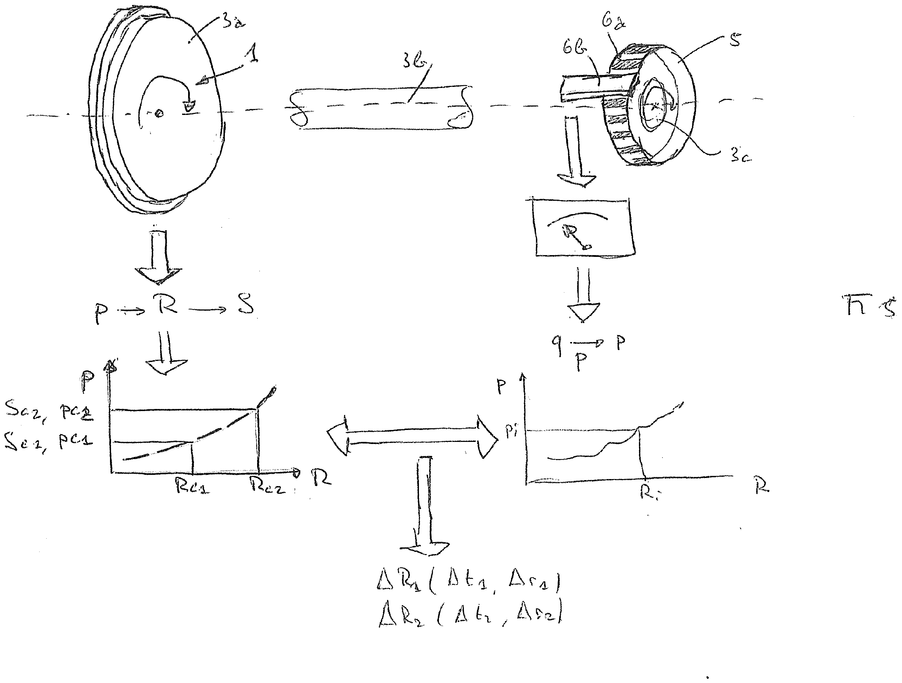

La figure 5 est un bloc diagramme illustrant le procédé de prédiction selon l'invention.

On décrit maintenant en détail plusieurs modes de réalisation de l'invention au moyen des exemples expliqués à l'aide des dessins et en utilisant les signes de référence qui figurent dans les dessins.

L'invention concerne un procédé de prédiction qu'un organe cinématique rotatif à surveiller 1 devrait atteindre un seuil significatif Sc d'un état structurel S donné après une certaine rotation R.

Cet organe cinématique rotatif à surveiller 1 fait partie d'une chaîne cinématique 2 comportant plusieurs organes cinématiques 3 associés les uns aux autres d'un appareil, d'une machine ou d'un engin. Par exemple, il peut s'agir d'un engin à roues, tel qu'un train, pouvant comporter plusieurs chaînes cinématiques 2, chaque chaîne cinématique 2 comportant elle-même plusieurs organes cinématiques 3 tels qu'une roue 3a, un essieu 3b associé à la roue, une unité de roulement 3c à corps roulants associée à l'essieu 3b et à un châssis 4, et le cas échéant un dispositif d'entraînement en rotation de l'essieu.

Cette application n'est pas exclusive d'autres, l'engin à roues pouvant être un autre type de véhicule, automobile ou non, ou bien la chaîne cinématique 2 pouvant faire partie d'un autre type appareil ou d'engin, tels qu'une éolienne, un ventilateur industriel ou une machine-outil, cette liste n'étant qu'exemplative et nullement limitative.

L'un des organes cinématiques 3 de la chaîne cinématique 2 est qualifié d'organe cinématique rotatif pour la mesure 4.

L'invention a également pour objet un système de prédiction que l'organe cinématique rotatif à surveiller 1 devrait atteindre le seuil significatif Sc de l'état structurel S donné après la rotation R, spécialement destiné à la mise en oeuvre du procédé de prédiction.

L'invention a également pour objet l'application du procédé de prédiction à la prédiction de l'état structurel de l'organe cinématique rotatif à surveiller 1 de la chaîne cinématique 2 d'un appareil, d'une machine ou d'un engin, en particulier un engin à roues, et plus spécialement un train.

L'invention a également pour objet l'appareil, la machine ou l'engin en question qui comporte au moins un tel système de prédiction associé à l'organe cinématique rotatif à surveiller 1.

L'état structurel S objet de la prédiction est typiquement une altération (défaut) de l'organe cinématique rotatif à surveiller 1.

Un seuil significatif Sc de l'état structurel S est par exemple celui d'une mise sous surveillance spécifique parce qu'un défaut est apparu et devrait s'accentuer ou celui d'un remplacement préventif afin d'éviter les conséquences négatives résultant d'un défaut d'un certain degré ou encore celui d'un remplacement impératif d'urgence immédiate, compte tenu que le degré du défaut met en jeu la sécurité ou peut déboucher sur un désordre ou un incident grave.

Pour un même organe cinématique rotatif à surveiller 1, il peut y avoir plusieurs seuils d'importance croissante et de gravité de plus en plus intense, notamment un premier seuil d'alerte Sc1 et un second seuil d'alarme Sc2.

La rotation R après laquelle l'état structurel S, atteint le seuil significatif Sc est soit la durée de rotation t soit la nombre de tours de rotation r.

L'invention est particulièrement utile pour la prévention des incidents pouvant affecter l'organe cinématique rotatif à surveiller 1 ou sa maintenance, y compris le remplacement, l'invention permettant en effet, par exemple, que le remplacement de l'organe cinématique rotatif à surveiller 1 dont il est prévu qu'il sera prochainement défectueux intervienne au moment optimal, ni trop tôt ni trop tard, et connu à l'avance.

L'invention repose sur le principe que l'on peut détecter un défaut structurel d'un ensemble mécanique comprenant un organe tournant, moyennant une analyse préalable d'identification d'une fréquence caractéristique de l'apparition du défaut sur un tour de rotation de l'organe tournant et les étapes itératives consistant à :
- mesurer la vitesse instantanée de rotation de l'organe tournant,
- échantillonner angulairement la mesure pour obtenir un signal échantillonné qui est représentatif de la vitesse instantanée de rotation de l'organe tournant,
- procéder à une analyse harmonique spatiale du signal échantillonné pour obtenir un spectre de la vitesse instantanée de rotation de l'organe tournant, par exemple par transformée de Fourier spatiale du signal échantillonné,
- surveiller l'amplitude du spectre pour la fréquence caractéristique.

Ainsi, en fonction de ladite amplitude, on peut en déduire l'apparition du défaut correspondant, par exemple parce que l'amplitude du spectre est supérieure à un seuil. On peut en outre quantifier le défaut en fonction de l'amplitude et/ou de la forme du spectre.

Un tel procédé est connu du document FR-A-2 944 875.

Par exemple, on peut détecter un défaut structurel d'une unité de roulement comprenant une bague fixe, une bague mobile, l'une des bagues étant une bague intérieure et l'autre des bagues étant une bague extérieure, une ou plusieurs rangées de corps roulants disposées entre les bagues pour permettre leur rotation relative, et le cas échéant une ou plusieurs cages de maintien des corps roulants.

L'analyse préalable peut être réalisée moyennant une étude géométrique de l'ensemble mécanique, en particulier à partir des relations cinématiques entre les différents composants mécaniques de l'ensemble, de sorte à localiser une fréquence identifiant chacun des défauts structurels susceptibles de se produire. Par exemple, pour une unité de roulement, l'identification de la fréquence caractéristique d'un défaut peut être réalisée par calcul de la fréquence de passage d'un corps roulant sur ledit défaut. Ainsi, la fréquence caractéristique peut correspondre à une estimation du nombre de fois par tour qu'un corps roulant passe sur le défaut.

La mesure de la vitesse instantanée de rotation de l'organe tournant peut être réalisée sur l'organe tournant en question ou sur un autre organe tournant qui lui est associé dans l'ensemble mécanique, par exemple au moyen d'un ensemble codeur-capteur 6, dont le codeur 6a est solidaire en rotation de l'organe tournant et peut être de type magnétique avec une piste multipolaire d'une succession alternée de pôles magnétiques Nord et Sud dont la géométrie est identique et dont le capteur 6b est fixe et disposé en regard avec un faible écartement de la piste multipolaire 6a.

Un tel ensemble codeur-capteur 6 est par exemple décrit dans le document FR-A-2 792 403.

Selon une réalisation, le procédé de détection qui vient d'être décrit prévoit en outre une détermination préalable de la signature propre au codeur, laquelle est soustraite du signal de la vitesse instantanée pour réaliser la surveillance de l'amplitude sur le spectre obtenu.

Le procédé de prédiction que l'organe cinématique rotatif à surveiller 1 devrait atteindre un seuil significatif Sc d'un état structurel donné S après une certaine rotation R repose sur le procédé de détection qui vient d'être décrit.

Dans le procédé de prédiction selon la présente invention, d'une part, on définit un paramètre indicateur p des conditions de rotation de l'organe cinématique rotatif pour la mesure 5 qui est caractéristique de l'état structurel S de l'organe cinématique rotatif à surveiller 1.

Comme dans le procédé de détection précédemment décrit, le paramètre indicateur p est, sinon la vitesse instantanée elle-même de l'organe cinématique rotatif à surveiller 1, du moins calculé à partir de sa vitesse de rotation instantanée.

Selon une réalisation, l'organe cinématique rotatif à surveiller 1 est le même que l'organe cinématique rotatif pour la mesure 5, et par exemple, il s'agit de l'unité de roulement à corps roulants 3c.

Selon une autre réalisation, l'organe cinématique rotatif à surveiller 1 est différent de l'organe cinématique rotatif pour la mesure 5. Par exemple l'organe cinématique rotatif à surveiller 1 est la roue 3a ou l'essieu 3b, alors que l'organe cinématique rotatif pour la mesure 5 est l'unité de roulement à corps roulants 3c.

Cette différenciation entre l'organe cinématique rotatif à surveiller 1 et l'organe cinématique rotatif pour la mesure 5 est rendue possible car un défaut impacte la vitesse instantanée avec une fréquence différente selon l'organe de la chaîne cinématique où se produit ce défaut.

On mesure et on calcule quand même mais en étant sur l'autre arbre.
La relation entre le paramètre indicateur p des conditions de rotation de l'organe cinématique rotatif pour la mesure 5 caractéristique de l'état structurel S de l'organe cinématique rotatif à surveiller 1 et la rotation R de l'organe cinématique rotatif pour la mesure 5 peut, par exemple, être schématisée, comme il est illustré par la figure 2, par une courbe Cc sur une représentation graphique selon deux axes (abscisses et ordonnées).

L'abscisse est l'échelle de la rotation R, temps de roulement t ou nombre de tours de rotation r. Il faut comprendre par-là que depuis l'origine 0, une valeur Ri de la rotation correspond à un temps total de roulement ti ou au nombre cumulé de tours de rotation r de l'organe cinématique rotatif à surveiller 1.

Dans le procédé de prédiction selon la présente invention, d'autre part, on a, à disposition, une loi d'évolution du paramètre indicateur p en fonction de la rotation R de l'organe cinématique rotatif à surveiller 1, qui prend en compte la nature dudit état structurel considéré. Cette loi d'évolution peut être élaborée de façon théorique ou empirique ou à partir de cas réels. Elle peut, par exemple être schématisée, comme il est illustré par la figure 3, par une courbe Ct sur une même représentation graphique selon deux axes (abscisses et ordonnées).

La courbe Ct peut être une ligne ou un serpent, prenant en compte un certain degré d'erreur, d'imprécision, ou de sécurité.

La loi d'évolution du paramètre indicateur p en fonction de la rotation R de l'organe cinématique rotatif à surveiller 1 étant à disposition ou calculée à partir de l'historique des données, et de même la courbe Ct sur la représentation graphique à deux dimensions (abscisses et ordonnées), à chaque valeur du paramètre indicateur p - ou fonction du paramètre indicateur p - peut être associée un état structurel donné S.

En particulier, on peut définir une valeur pc du paramètre indicateur reflétant le seuil significatif Sc, et en correspondance, le seuil de rotation R, nombre de tours de rotation rc ou durée de rotation tc.

Et, bien entendu, on peut définir les valeurs pc1 et pc2 des seuils d'alerte Sc1 et d'alarme Sc2 et en correspondance, les seuils de rotation R1 et R2, à savoir les nombres de tours de rotation rc1 et rc2 ou les durées de rotation tc1 et tc2.

Ces données (courbe Ct, valeurs pc1, pc2..., seuils significatifs Sc1, Sc2..., seuils de rotation R1, R2..., à savoir nombres de tours de rotation rc1, rc2... ou durées de rotation tc1, tc2...) peuvent être stockées et à disposition de moyens de traitement ou de calcul.

Lorsque la chaîne cinématique 2 est en rotation, on réalise une opération de mesure ou de calcul sur l'organe cinématique rotatif pour la mesure 5. Cette opération vise à mesurer le paramètre indicateur p sur l'organe cinématique rotatif pour la mesure 5 ou à calculer le paramètre indicateur p à partir d'au moins un paramètre de roulement mesuré sur l'organe cinématique rotatif pour la mesure 5.

Puis, on associe la valeur mesurée ou calculée du paramètre indicateur p au cumul correspondant du nombre de tours de rotation r ou de la durée de rotation t de l'organe cinématique rotatif à surveiller 1.

Puis, à partir de la valeur mesurée ou calculée du paramètre indicateur pn (comme représenté sur la courbe Cc) et de la loi d'évolution (comme représenté par la courbe Ct), dans une opération de comparaison, illustrée par la figure 4, on compare ledit cumul correspondant du nombre de tours de rotation rn ou de la durée de rotation tn, c'est-à-dire la rotation Rn, de l'organe cinématique rotatif à surveiller 1 et le seuil du nombre de tours de rotation rc1, rc2 ou de la durée de rotation tc1, tc2, c'est-à-dire la rotation Rc1, Rc2, et on déduit le nombre de tours de rotation Δr1, Δr2, ou la durée de rotation Δt1, Δt2, c'est-à-dire la rotation ΔR1, ΔR2, pour atteindre le seuil du nombre de tours de rotation rc1, rc2 ou de la durée de rotation tc1, tc2, c'est-à-dire la rotation Rc1, Rc2.

C'est cette valeur ou ce sont ces valeurs du nombre de tours de rotation Δr1, Δr2, ou de la durée de rotation Δt1, Δt2, c'est-à-dire de la rotation ΔR1, ΔR2, qui constituent la prédiction objet de l'invention.

Par exemple, le paramètre indicateur mesuré étant pn, l'exploitant de l'appareil, de la machine ou de l'engin peut prédire que l'organe cinématique rotatif à surveiller 1 devrait atteindre un premier seuil d'alerte Sc1 et un second seuil d'alarme Sc2 après un nombre de tours de rotation de Δr1 et Δr2, ou une durée de rotation de Δt1 ou Δt2.

En fonction des règles de sécurité ou de maintenance, l'exploitant peut alors décider une opération de maintenance ou de remplacement.

Selon les réalisations, on réalise l'opération de comparaison qui vient d'être décrite soit simultanément à l'opération de mesure ou de calcul soit postérieurement à celle-ci.

Selon une réalisation possible, on réalise l'opération de mesure ou de calcul en permanence et en temps réel.

Selon les cas, on réalise l'opération de calcul alors que l'appareil, la machine ou l'engin est en mouvement ou, au contraire, est à l'arrêt.

Egalement, selon les cas, l'opération de calcul est réalisée sur l'appareil, la machine ou l'engin ou bien elle est réalisée de façon déportée par rapport à lui. Dans ce dernier cas, on communique depuis l'appareil, la machine ou l'engin et de façon déportée par rapport à lui la valeur du paramètre indicateur p, le nombre de tours de rotation r ou la durée de rotation t.

Dans une autre réalisation, on communique depuis l'appareil, la machine ou l'engin et de façon déportée par rapport à lui la valeur du paramètre indicateur p, le nombre de tours de rotation Δr ou la durée de rotation Δt pour atteindre le seuil du nombre de tours de rotation rc ou de la durée de rotation tc.

L'opération de calcul peut être réalisée grâce à des moyens de calcul embarqués sur l'appareil, la machine ou l'engin ou bien de façon déportée par rapport à lui.

## Revendications

1. Procédé de prédiction qu'un organe cinématique rotatif à surveiller (1) devrait passer un seuil critique relatif à l'état structurel - tel qu'un défaut de l'organe cinématique rotatif à surveiller (1) - après une certaine rotation - durée de rotation ou nombre de tours de rotation -, l'organe cinématique rotatif à surveiller (1) faisant partie d'une chaîne cinématique (2) comportant plusieurs organes cinématiques (3a, 3b) associés les uns aux autres d'un appareil, d'une machine ou d'un engin, tels qu'une roue, un essieu associé à la roue, une unité de roulement à corps roulants (3c) associée à l'essieu et à un châssis, et le cas échéant un dispositif d'entraînement en rotation de l'essieu, dont un organe cinématique rotatif pour la mesure (5), dans lequel :
▪ on définit un paramètre indicateur des conditions de rotation de l'organe cinématique rotatif pour la mesure (5) caractéristique de l'état structurel de l'organe cinématique rotatif à surveiller (1),
▪ on a à disposition ou on calcule sur la base de l'historique des paramètres indicateurs une loi d'évolution du paramètre indicateur en fonction de la rotation de l'organe cinématique rotatif à surveiller (1) - cumul du nombre de tours de rotation ou durée de rotation - prenant en compte la nature dudit état structurel considéré,
▪ on définit au moins une valeur dudit paramètre indicateur - ou fonction dudit paramètre indicateur - qui est caractéristique dudit seuil significatif correspondant audit état structurel donné, seuil du nombre de tours de rotation ou de durée de rotation,
▪ lorsque la chaîne cinématique (2) est en rotation, dans une opération de mesure ou de calcul, on mesure le paramètre indicateur sur l'organe cinématique rotatif pour la mesure (5) ou on calcule le paramètre indicateur à partir d'au moins un paramètre de roulement mesuré sur l'organe cinématique rotatif pour la mesure (5),
▪ on associe la valeur mesurée ou calculée du paramètre indicateur au cumul correspondant du nombre de tours de rotation ou de la durée de rotation de l'organe cinématique rotatif à surveiller (1),
▪ à partir de la valeur mesurée ou calculée du paramètre indicateur et de la loi d'évolution, dans une opération de comparaison, on compare ledit cumul correspondant du nombre de tours de rotation ou de la durée de rotation de l'organe cinématique rotatif à surveiller (1) et le seuil du nombre de tours de rotation ou de la durée de rotation et on déduit le nombre de tours de rotation ou la durée de rotation pour atteindre le seuil du nombre de tours de rotation ou de la durée de rotation.

2. Procédé de prédiction selon la revendication 1, dans lequel l'organe cinématique rotatif à surveiller (1) est le même que l'organe cinématique rotatif pour la mesure (5).

3. Procédé de prédiction selon la revendication 1, dans lequel l'organe cinématique rotatif à surveiller (1) est différent de l'organe cinématique rotatif pour la mesure (5).

4. Procédé de prédiction selon l'une quelconque des revendications 1 à 3, dans lequel l'organe cinématique rotatif pour la mesure (5) est l'unité de roulement à corps roulants (3c).

5. Procédé de prédiction selon l'une quelconque des revendications 1 à 4, dans lequel le paramètre indicateur est calculé à partir de la vitesse de rotation instantanée.

6. Procédé de prédiction selon l'une quelconque des revendications 1 à 5, dans lequel l'état structurel donné est une altération de l'organe cinématique rotatif à surveiller (1).

7. Procédé de prédiction selon l'une quelconque des revendications 1 à 6, dans lequel on réalise l'opération de comparaison simultanément à l'opération de mesure ou de calcul.

8. Procédé de prédiction selon l'une quelconque des revendications 1 à 6, dans lequel on réalise l'opération de comparaison postérieurement à l'opération de mesure ou de calcul.

9. Procédé de prédiction selon l'une quelconque des revendications 1 à 8, dans lequel on réalise l'opération de mesure ou de calcul en permanence et en temps réel.

10. Procédé de prédiction selon l'une quelconque des revendications 1 à 9, dans lequel l'opération de calcul est réalisée alors que l'appareil, la machine ou l'engin soit est en mouvement soit est à l'arrêt.

11. Procédé de prédiction selon l'une quelconque des revendications 1 à 10, dans lequel l'opération de calcul soit est réalisée sur l'appareil, la machine ou l'engin soit est réalisée de façon déportée par rapport à l'appareil, la machine ou l'engin.

12. Procédé de prédiction selon l'une quelconque des revendications 1 à 11, dans lequel on communique depuis l'appareil, la machine ou l'engin et de façon déportée par rapport à lui des données à savoir paramètre indicateur ou nombre de tours de rotation ou durée de rotation pour atteindre le seuil du nombre de tours de rotation ou de la durée de rotation.

13. Système de prédiction qu'un organe cinématique rotatif à surveiller (1) devrait atteindre un seuil significatif d'un état structurel donné - tel qu'un défaut de l'organe cinématique rotatif à surveiller (1) - après une certaine rotation - durée de rotation ou nombre de tours de rotation -, l'organe cinématique rotatif à surveiller (1) faisant partie d'une chaîne cinématique (2) comportant plusieurs organes cinématiques associés les uns aux autres d'un appareil, d'une machine ou d'un engin, tels qu'une roue, un essieu associé à la roue, une unité de roulement à corps roulants (3c) associée à l'essieu et à un châssis, et le cas échéant un dispositif d'entraînement en rotation de l'essieu, dont un organe cinématique rotatif pour la mesure (5), spécialement destiné à la mise en oeuvre du procédé de prédiction selon l'une quelconque des revendications 1 à 12, qui comprend :
▪ un paramètre indicateur des conditions de rotation de l'organe cinématique rotatif pour la mesure (5) caractéristique de l'état structurel de l'organe cinématique rotatif à surveiller (1),
▪ une loi d'évolution du paramètre indicateur en fonction de la rotation de l'organe cinématique rotatif à surveiller (1) - cumul du nombre de tours de rotation ou durée de rotation - prenant en compte la nature dudit état structurel considéré,
▪ une valeur dudit paramètre indicateur - ou fonction dudit paramètre indicateur - qui est caractéristique dudit seuil significatif correspondant audit état structurel donné, seuil du nombre de tours de rotation ou de durée de rotation,
▪ un moyen de mesure sur ou de calcul du paramètre indicateur à partir de l'organe cinématique rotatif pour la mesure (5),
▪ un moyen d'association de la valeur mesurée ou calculée du paramètre indicateur au cumul correspondant du nombre de tours de rotation ou de la durée de rotation de l'organe cinématique rotatif à surveiller (1),
▪ un moyen de comparaison du cumul correspondant du nombre de tours de rotation ou de la durée de rotation de l'organe cinématique rotatif à surveiller (1) et du seuil du nombre de tours de rotation ou de la durée de rotation, de sorte à déduire le nombre de tours de rotation ou la durée de rotation pour atteindre le seuil du nombre de tours de rotation ou de la durée de rotation.

14. Application du procédé selon l'une quelconque des revendications 1 à 12 à la prédiction de l'état structurel d'un organe cinématique rotatif à surveiller (1) d'une chaîne cinématique (2) d'un appareil, d'une machine ou d'un engin tel qu'un engin à roues, en particulier un train.

15. Appareil, machine ou engin, tel qu'un engin à roues, comportant au moins une chaîne cinématique (2) comportant plusieurs organes cinématiques (3, 3a, 3b) associés les uns aux autres, dont au moins un organe cinématique rotatif à surveiller (1) en ce qu'il devrait passer un seuil significatif d'un état structurel donné - tel qu'un défaut - après une certaine rotation - durée de rotation ou nombre de tours de rotation -, qui comporte au moins un système de prédiction selon la revendication 13, associé à un organe cinématique rotatif à surveiller (1).

## Patentansprüche

1. Vorhersageverfahren, um vorherzusagen, dass ein zu überwachendes drehbares kinematisches Element (1) nach einer gewissen Rotation - Rotationsdauer oder Anzahl von Umdrehungen - einen kritischen Schwellenwert in Bezug auf den strukturellen Zustand überschreiten müsste - etwa einen Defekt des zu überwachenden drehbaren kinematischen Elements (1) - wobei das zu überwachende drehbare kinematische Element (1) Teil einer kinematischen Kette (2) ist, welche mehrere miteinander verbundene kinematische Elemente (3a, 3b) eines Apparats, einer Maschine oder einer Vorrichtung umfasst, beispielsweise ein Rad, eine mit dem Rad verbundene Achse, eine mit der Achse und einem Fahrgestell verbundene Rolleinheit mit Rollkörpern (3c) sowie gegebenenfalls eine Rotationsantriebseinrichtung für die Achse, wovon eines ein drehbares kinematisches Element für die Messung (5) ist, wobei:
- ein Indikatorparameter für Rotationsbedingungen des drehbaren kinematischen Elements für die Messung (5) definiert wird, der charakteristisch für den strukturellen Zustand des zu überwachenden drehbaren kinematischen Elements (1) ist,
- ein Entwicklungsgesetz für den Indikatorparameter als Funktion der Rotation des zu überwachenden drehbaren kinematischen Elements (1) - Kumulierung der Anzahl von Umdrehungen oder Rotationsdauer - zur Verfügung steht oder auf der Grundlage der Historie der Indikatorparameter berechnet wird, wobei die Natur des betreffenden strukturellen Zustands berücksichtigt wird,
- wenigstens ein Wert des Indikatorparameters - oder als Funktion des Indikatorparameters - definiert wird, der charakteristisch ist für den bedeutsamen Schwellenwert entsprechend dem gegebenen strukturellen Zustand, Schwellenwert der Anzahl von Umdrehungen oder der Rotationsdauer,
- dann, wenn sich die kinematische Kette (2) in Rotation befindet, in einem Mess- oder Berechnungsverfahren der Indikatorparameter an dem drehbaren kinematischen Element für die Messung (5) gemessen wird, oder der Indikatorparameter ausgehend von wenigstens einem Rollparameter berechnet wird, der an dem drehbaren kinematischen Element für die Messung (5) gemessen wird,
- der gemessene oder berechnete Wert des Indikatorparameters der Kumulierung zugeordnet wird, entsprechend der Anzahl von Umdrehungen oder der Rotationsdauer des zu überwachenden drehbaren kinematischen Elements (1),
- ausgehend von dem gemessenen oder berechneten Wert des Indikatorparameters und dem Entwicklungsgesetz in einem Vergleichsverfahren die Kumulierung, die der Anzahl von Umdrehungen oder der Rotationsdauer des zu überwachenden drehbaren kinematischen Elements (1) entspricht, und der Schwellenwert für die Anzahl von Umdrehungen oder für die Rotationsdauer verglichen werden und die Anzahl von Umdrehungen oder die Rotationsdauer zum Erreichen des Schwellenwerts für die Anzahl von Umdrehungen oder für die Rotationsdauer hergeleitet wird.

2. Vorhersageverfahren nach Anspruch 1, wobei das zu überwachende drehbare kinematische Element (1) das gleiche ist wie das drehbare kinematische Element für die Messung (5).

3. Vorhersageverfahren nach Anspruch 1, wobei das zu überwachende drehbare kinematische Element (1) von dem drehbaren kinematischen Element für die Messung (5) verschieden ist.

4. Vorhersageverfahren nach einem der Ansprüche 1 bis 3, wobei das drehbare kinematische Element für die Messung (5) die Rolleinheit mit Rollkörpern (3c) ist.

5. Vorhersageverfahren nach einem der Ansprüche 1 bis 4, wobei der Indikatorparameter ausgehend von der momentanen Rotationsgeschwindigkeit berechnet wird.

6. Vorhersageverfahren nach einem der Ansprüche 1 bis 5, wobei der gegebene strukturelle Zustand eine Änderung des zu überwachenden drehbaren kinematischen Elements (1) ist.

7. Vorhersageverfahren einem der Ansprüche 1 bis 6, wobei das Vergleichsverfahren gleichzeitig mit dem Mess- oder Berechnungsverfahren durchgeführt wird.

8. Vorhersageverfahren nach einem der Ansprüche 1 bis 6, wobei das Vergleichsverfahren nach dem Mess- oder Berechnungsverfahren durchgeführt wird.

9. Vorhersageverfahren nach einem der Ansprüche 1 bis 8, wobei das Mess- oder Berechnungsverfahren kontinuierlich und in Echtzeit durchgeführt wird.

10. Vorhersageverfahren nach einem der Ansprüche 1 bis 9, wobei das Berechnungsverfahren durchgeführt wird, während sich der Apparat, die Maschine oder die Vorrichtung entweder in Bewegung oder im Stillstand befindet.

11. Vorhersageverfahren nach einem der Ansprüche 1 bis 10, wobei das Berechnungsverfahren entweder auf dem Apparat, der Maschine oder der Vorrichtung durchgeführt wird, oder in bezüglich des Apparats, der Maschine oder der Vorrichtung verlagerter Weise durchgeführt wird.

12. Vorhersageverfahren nach einem der Ansprüche 1 bis 11, wobei von dem Apparat, der Maschine oder der Vorrichtung aus und in bezüglich davon verlagerter Weise Daten übertragen werden nämlich Indikatorparameter oder Anzahl von Umdrehungen oder Rotationsdauer, um den Schwellenwert für die Anzahl von Umdrehungen oder die Rotationsdauer zu erreichen.

13. Vorhersagesystem, um vorherzusagen, dass ein zu überwachendes drehbares kinematisches Element (1), nach einer bestimmten Drehung - Rotationsdauer oder Anzahl von Umdrehungen - einen bedeutsamen Schwellenwert eines gegebenen strukturellen Zustands erreichen sollte, etwa einen Defekt des zu überwachenden drehbaren kinematischen Elements (1), wobei das zu überwachende drehbare kinematische Element (1) Teil einer kinematischen Kette (2) ist, welche mehrere miteinander verbundene kinematische Elemente von einem Apparat, einer Maschine oder einer Vorrichtung umfasst, beispielsweise ein Rad, eine mit dem Rad verbundene Achse, eine Rolleinheit mit Rollkörpern (3c), die mit der Achse und einem Fahrgestell verbunden ist, und gegebenenfalls eine Rotationsantriebsvorrichtung für die Achse, wovon eines ein drehbares kinematisches Element für die Messung (5) ist, welches speziell dazu bestimmt ist, das Vorhersageverfahren nach einem der Ansprüche 1 bis 12 durchzuführen, umfassend:
- einen Indikatorparameter für Rotationsbedingungen des drehbaren kinematischen Elements für die Messung (5), welcher charakteristisch ist für den strukturellen Zustand des zu überwachenden drehbaren kinematischen Elements (1),
- ein Entwicklungsgesetz für den Indikatorparameter als Funktion der Drehung des zu überwachenden drehbaren kinematischen Elements (1) - Kumulierung der Anzahl von Umdrehungen oder Rotationsdauer - wobei die Natur des betreffenden strukturellen Zustands berücksichtigt wird,
- einen Wert des Indikatorparameters - oder als Funktion des Indikatorparameters - der charakteristisch ist für den bedeutsamen Schwellenwert, entsprechend dem gegebenen strukturellen Zustand, dem Schwellenwert für die Anzahl von Umdrehungen oder für die Rotationsdauer,
- ein Mess- oder Berechnungsmittel für den Indikatorparameter ausgehend von dem drehbaren kinematischen Element für die Messung (5),
- ein Mittel zur Zuordnung des gemessenen oder berechneten Wertes des Indikatorparameters zu der Kumulierung entsprechend der Anzahl von Umdrehungen oder der Rotationsdauer des zu überwachenden drehbaren kinematischen Elements (1),
- ein Mittel zum Vergleichen der Kumulierung, welche der Anzahl von Umdrehungen oder der Rotationsdauer des zu überwachenden drehbaren kinematischen Elements (1) entspricht, und des Schwellenwerts für die Anzahl von Umdrehungen oder für die Rotationsdauer, so dass die Anzahl von Umdrehungen oder die Rotationsdauer zum Erreichen des Schwellenwerts für die Anzahl von Umdrehungen oder die Rotationsdauer hergeleitet wird.

14. Anwendung des Verfahrens nach einem der Ansprüche 1 bis 12 auf die Vorhersage des strukturellen Zustands eines zu überwachenden drehbaren kinematischen Elements (1) einer kinematischen Kette (2) eines Apparats, einer Maschine oder einer Vorrichtung, beispielsweise einer Vorrichtung mit Rädern, insbesondere eines Zuges.

15. Apparat, Maschine oder Vorrichtung, beispielsweise eine Vorrichtung mit Rädern, umfassend wenigstens eine kinematische Kette (2), welche mehrere kinematische Elemente (3, 3a, 3b) umfasst, die miteinander verbunden sind, von denen wenigstens eines ein zu überwachendes drehbares kinematisches Element (1) ist, dahingehend dass es nach einer bestimmten Rotation - Rotationsdauer oder Anzahl von Umdrehungen - einen bedeutsamen Schwellenwert eines gegebenen strukturellen Zustands passieren sollte - beispielsweise einen Defekt-, welcher bzw. welche wenigstens ein Vorhersagesystem nach Anspruch 13 umfasst, welches einem zu überwachenden drehbaren kinematischen Element (1) zugeordnet ist.

## Claims

1. Method for predicting that a rotary drive member (1) to be monitored should pass a critical threshold relating to structural condition - such as a defect of the rotary drive member (1) to be monitored - after a certain rotation - duration of rotation or number of revolutions, the rotary drive member (1) to be monitored forming part of a drive train (2) comprising several mutually co-operating drive members (3a, 3b) of an apparatus, machine or mechanical assembly, such as a wheel, an axle co-operating with the wheel, a bearing unit having rolling bodies (3c) co-operating with the axle and with a chassis, and, if necessary, a device for driving the axle in rotation of which one rotary drive member (5) is to be used for measuring purposes, wherein:
▪ a parameter indicative of the rotation conditions of the rotary drive member to be measured (5) characteristic of the structural condition of the rotary drive member (1) to be monitored is defined,
▪ a law of evolution of the indicative parameter as a function of the rotation of the rotary drive member (1) to be monitored - cumulative number of revolutions or duration of rotation - taking account of the nature of said structural condition in question is available or is calculated on the basis of historical indicative parameters,
▪ at least one value of said indicative parameter - or function of said indicative parameter - is defined which is characteristic of said significant threshold corresponding to said given structural condition, threshold of the number of revolutions or duration of rotation,
▪ during a measuring or calculating operation when the drive train (2) is rotating, the indicative parameter on the rotary drive member (5) used for measuring purposes is measured or the indicative parameter is calculated on the basis of at least one rolling parameter measured on the rotary drive member (5) used for measuring purposes,
▪ the measured or calculated value of the indicative parameter is correlated with the corresponding cumulative number of revolutions or duration of rotation of the rotary drive member (1) to be monitored,
▪ during a comparison operation, on the basis of the measured or calculated value of the indicative parameter and the law of evolution, said corresponding cumulative number of revolutions or duration of rotation of the rotary drive member (1) to be monitored is compared with the threshold of the number of revolutions or duration of rotation, and the number of revolutions or duration of rotation needed in order to reach the threshold of the number of revolutions or duration of rotation is deduced.

2. Prediction method as claimed in claim 1, wherein the rotary drive member (1) to be monitored is the same as the rotary drive member (5) used for measuring purposes.

3. Prediction method as claimed in claim 1, wherein the rotary drive member (1) to be monitored is different from the rotary drive member (5) used for measuring purposes.

4. Prediction method as claimed in any one of claims 1 to 3, wherein the rotary drive member (5) used for measuring purposes is the bearing unit having rolling bodies (3c).

5. Prediction method as claimed in any one of claims 1 to 4, wherein the indicative parameter is calculated on the basis of the instantaneous rotation speed.

6. Prediction method as claimed in any one of claims 1 to 5, wherein the given structural condition is an altered state of the rotary drive member (1) to be monitored.

7. Prediction method as claimed in any one of claims 1 to 6, wherein the comparison operation is implemented at the same time as the measuring or calculating operation.

8. Prediction method as claimed in any one of claims 1 to 6, wherein the comparison operation is implemented after the measuring or calculating operation.

9. Prediction method as claimed in any one of claims 1 to 8, wherein the measuring or calculating operation is implemented permanently and in real time.

10. Prediction method as claimed in any one of claims 1 to 9, wherein the calculating operation is implemented when the apparatus, machine or mechanical assembly is either in motion or is stationary.

11. Prediction method as claimed in any one of claims 1 to 10, wherein the calculating operation is implemented either on the apparatus, machine or mechanical assembly or is implemented remotely from the apparatus, machine or mechanical assembly.

12. Prediction method as claimed in any one of claims 1 to 11, wherein data is communicated from the apparatus, machine or mechanical assembly and remotely from it, namely the indicative parameter or number of revolutions or duration of rotation needed in order to reach the threshold of the number of revolutions or duration of rotation.

13. System for predicting that a rotary drive member (1) to be monitored should reach a significant threshold of a given structural condition - such as a defect of the rotary drive member (1) to be monitored - after a certain rotation - duration of rotation or number of revolutions, the rotary drive member (1) to be monitored forming part of a drive train (2) comprising several mutually co-operating drive members of an apparatus, machine or mechanical assembly, such as a wheel, an axle co-operating with the wheel, a bearing unit having rolling bodies (3c) co-operating with the axle and with a chassis, and, if necessary, a device for driving the axle in rotation of which one rotary drive member (5) is used for measuring purposes, specifically intended for implementing the prediction method as claimed in anyone of claims 1 to 12, comprising:
▪ a parameter indicative of the rotation conditions of the rotary drive member (5) used for measuring purposes characteristic of the structural condition of the rotary drive member (1) to be monitored,
▪ a law of evolution of the indicative parameter as a function of the rotation of the rotary drive member (1) to be monitored - cumulative number of revolutions or duration of rotation - taking account of the nature of said structural condition in question,
▪ a value of said indicative parameter - or function of said indicative parameter - which is characteristic of said significant threshold corresponding to said given structural condition, threshold of the number of revolutions or duration of rotation,
▪ a means for measuring or calculating the indicative parameter on the basis of the rotary drive member (5) used for measuring purposes,
▪ a means for correlating the measured or calculated value of the indicative parameter with the corresponding cumulative number of revolutions or duration of rotation of the rotary drive member (1) to be monitored,
▪ a means for comparing the corresponding cumulative number of revolutions or duration of rotation of the rotary drive member (1) to be monitored and the threshold of the number of revolutions or duration of rotation in order to deduce the number of revolutions or duration of rotation needed in order to reach the threshold of the number of revolutions or duration of rotation.

14. Application of the method as claimed in any one of claims 1 to 12 as a means of predicting the structural condition of a rotary drive member (1) to be monitored in a drive train (2) of an apparatus, machine or mechanical assembly such as a machine having wheels, in particular a train.

15. Apparatus, machine or mechanical assembly, such as a machine having wheels, comprising at least one drive train (2) comprising several mutually co-operating drive members (3, 3a, 3b), of which at least one rotary drive member is to be monitored (1) to ascertain whether it should pass a significant threshold of a given structural condition - such as a defect - after a certain rotation - duration of rotation or number of revolutions, comprising at least one prediction system as claimed in claim 13, associated with a rotary drive member (1) to be monitored.
